# EUROPÄISCHE PATENTSCHRIFT

(11) **EP 3 375 939 B1**
(45) Veröffentlichungstag und Bekanntmachung des Hinweises auf die Patenterteilung: **04.08.2021**
(21) Anmeldenummer: 18158823.7
(22) Anmeldetag: 27.02.2018
(51) Int. Cl.: E03B 7/08, F24D 17/00, G05B 19/00

(54) **VERFAHREN ZUR STEUERUNG EINES GEBÄUDEWASSERVERSORGUNGSSYSTEMS**
METHOD FOR CONTROLLING A BUILDING WATER SUPPLY SYSTEM
PROCÉDÉ DE COMMANDE D'UN SYSTÈME D'ALIMENTATION EN EAU DU BÂTIMENT

(30) Priorität: 14.03.2017 DE 102017105449
(43) Veröffentlichungstag der Anmeldung: 19.09.2018
(73) Patentinhaber: Schell GmbH & Co. KG, 57462 Olpe (DE)
(72) Erfinder: Hof, Norbert, 57572 Harbach (DE); Wurm, Guido, 57489 Drolshagen (DE); Arens, Peter, 58511 Lüdenscheid (DE)
(74) Vertreter: Gottschald Patentanwälte Partnerschaft mbB

(56) Entgegenhaltungen:
- EP-A1- 1 845 207
- WO-A1-2016/107937
- GB-A- 2 502 165

## Beschreibung

Die Erfindung betrifft ein Verfahren zur Steuerung eines Gebäudewasserversorgungssystems gemäß Anspruch 1 sowie ein Gebäudewasserversorgungssystem zur Durchführung eines solchen Verfahrens gemäß Anspruch 14.

Bei der Trinkwasserversorgung von Gebäuden sind die Hygieneanforderungen in den letzten Jahren deutlich gestiegen. Ein relevanter Aspekt ist hier die Tatsache, dass über längere Zeit im Wasserleitungsnetzwerk stehendes Wasser, das auch als Stagnationswasser bezeichnet wird, zur ungewünschten Bildung von Keimen führen kann. In diesem Zusammenhang stellen Legionellen oder ähnliche Keime ein Gesundheitsrisiko dar. Aus diesem Grund ist dazu übergegangen worden, das betreffende Wasserleitungsnetzwerk regelmäßig zu spülen, was als Stagnationsspülen bezeichnet wird.

Das bekannte Verfahren zur Steuerung eines Gebäudewasserversorgungssystems (DE 93 13 983 U1), von dem die Erfindung ausgeht, ist darauf ausgerichtet, das Wasserleitungsnetzwerk automatisiert zu spülen. Hierfür sind verschiedene Sanitärarmaturen mit ansteuerbaren Armaturventilen ausgestattet, die von einer elektronischen Zentralsteuerung über ein Datennetzwerk ansteuerbar sind.

Während das bekannte Verfahren grundsätzlich geeignet ist, die Hygiene im Wasserleitungsnetzwerk auf einem vorgegebenen Niveau zu halten, ergeben sich in der Praxis Schwierigkeiten. Der Grund hierfür besteht darin, dass Störungen im Datennetzwerk und in der Zentraisteuerung nicht ausgeschlossen werden können. Sofern es sich bei der Zentralsteuerung um ein PC-basiertes System handelt, ist sogar damit zu rechnen, dass regelmäßig störungs- oder wartungsbedingte Funktionsunterbrechungen auftreten. Damit lässt sich die Hygiene im Wasserleitungsnetzwerk nur eingeschränkt sicherstellen.

Weitere Gebäudewasserversorgungssysteme sind aus der GB 2 502 165 A, der WO 2016/107937 A1 und der EP 1 845 207 A1 bekannt.

Der Erfindung liegt das Problem zugrunde, das bekannte Verfahren zur Steuerung eines Gebäudewasserversorgungssystems derart auszugestalten und weiterzubilden, dass die Zuverlässigkeit hinsichtlich der Bereitstellung eines vorgegebenen Hygieneniveaus gesteigert wird.

Das obige Problem wird bei einem Verfahren zur Steuerung eines Gebäudewasserversorgungssystems mit den Merkmalen von Anspruch 1 gelöst.

Vorschlagsgemäß wird zunächst einmal davon ausgegangen, dass das Gebäudewasserversorgungssystem im montierten Zustand an ein Wasserleitungsnetzwerk eines Gebäudes angeschlossen ist, wobei das Gebäudewasserversorgungssystem mehrere Sanitärarmaturen aufweist. Den Sanitärarmaturen ist jeweils ein Armaturaktuator, hier und vorzugsweise ein Armaturventil, mit einer elektronischen Armatursteuerung zugeordnet. Der Armaturaktuator wird zum Spülen zumindest eines Teils des Wasserleitungsnetzwerks in einzelnen Spülaktivitäten von der Armatursteuerung angesteuert. Mit anderen Worten, wird das Spülen in einzelnen Spülaktivitäten vorgenommen.

Eine den speziellen Gegebenheiten des jeweiligen Wasserleitungsnetzwerks berücksichtigende Stagnationsspülung lässt sich vorschlagsgemäß dadurch erzielen, dass das Gebäudewasserversorgungssystem eine elektronische Zentralsteuerung aufweist, die über Datenverbindungen ein Datennetzwerk mit den Armatursteuerungen ausbildet.

Vorschlagsgemäß ist nun erkannt worden, dass die Betriebssicherheit des Gebäudewassersystems im Hinblick auf die Hygiene selbst bei einem Totalausfall der Zentralsteuerung garantiert werden kann, indem die lokalen Armatursteuerungen mit einem gewissen Grad an Autonomie ausgestattet werden. Die Überlegung besteht darin, dass das im Normalbetrieb angesteuerte Spülen des Wasserleitungsnetzwerks im Störungsbetrieb, gegebenenfalls in reduzierter Weise, von den Armatursteuerungen jeweils lokal vorgenommen wird.

Im Einzelnen wird vorgeschlagen, dass im Normalbetrieb die Armatursteuerungen und damit die Armaturaktuatoren von der Zentralsteuerung nach einer globalen Spülstrategie angesteuert werden, während im Störungsbetrieb bei zumindest teilweisem Wegfall der Zentralsteuerung zumindest ein Teil der Armaturaktuatoren von den zugeordneten Armatursteuerungen autonom nach einer jeweils lokalen Spülstrategie angesteuert wird. Der autonom angesteuerte Teil der Armaturaktuatoren umfasst vorzugsweise gerade den Armaturaktuator bzw. die Annaturaktuatoren, der bzw. die von dem Wegfall der Zentralsteuerung betroffen ist bzw. sind, der bzw. die also von der Zentralsteuerung nicht mehr angesteuert werden kann bzw. können.

Der Normalbetrieb ist also dadurch definiert, dass das Spülen von der Zentralsteuerung nach einer globalen Spülstrategie vorgenommen wird. Dies ist so zu verstehen, dass das Spülen jedenfalls von der Zentralsteuerung vorgenommen wird. Das bedeutet, dass zusätzlich Spülaktivitäten von den Armatursteuerungen nach einer jeweils lokalen Spülstrategie angesteuert werden können.

Der Störungsbetrieb ist dadurch definiert, dass die Zentralsteuerung zumindest teilweise wegfällt, diese also eine Ansteuerung zumindest eines Teils der Armaturaktuatoren nicht mehr vornehmen kann. Der Störungsbetrieb kann darauf zurückgehen, dass die Datenverbindung zwischen der Zentralsteuerung und einer Armatursteuerung oder mehreren Armatursteuerungen unterbrochen ist. Der Störungsbetrieb kann aber auch darauf zurückgehen, dass die Zentralsteuerung selbst fehlerhaft oder gar nicht arbeitet.

Die autonome Ansteuerung der Armaturaktuatoren durch die Armatursteuerungen ist so zu verstehen, dass die Umsetzung der jeweils lokalen Spülstrategie vorgenommen wird, ohne dass die Zentralsteuerung daran beteiligt ist.

Mit der vorschlagsgemäßen Lösung ist ein zuverlässiges Spülen des Wasserleitungsnetzwerks gewährleistet, selbst wenn es im Störungsbetrieb zu einem zumindest teilweisen Wegfall der Zentralsteuerung kommt. Das kann insbesondere für hygienesensible Einrichtungen, beispielsweise für Krankenhäuser, von existenzieller Bedeutung sein.

Ferner hat das vorschlagsgemäße Verfahren den Vorteil, dass die Sanitärarmaturen des vorschlagsgemäßen Gebäudewasserversorgungssystems grundsätzlich auch als autarke Sanitärarmaturen, also ganz ohne Zentralsteuerung, eingesetzt werden können. Dies liegt daran, dass die Sanitärarmaturen, insbesondere deren Armatursteuerungen, wie oben angesprochen, einen gewissen Grad an Autonomie aufweisen.

Es lässt sich zusammenfassen, dass mit der obigen, steuerungstechnischen Redundanz in der Zentralsteuerung und den Armatursteuerungen die Zuverlässigkeit hinsichtlich der erzielbaren Hygiene gesteigert werden kann, wobei die Sanitärarmaturen als solche sowohl autark als auch in Verbindung mit einer vorschlagsgemäßen Zentralsteuerung innerhalb eines vorschlagsgemäßen Datennetzwerks einsetzbar sind.

Bei der bevorzugten Ausgestaltung gemäß Anspruch 2 handelt es sich bei den Sanitärarmaturen um Wasserauslassstellen, Urinale oder Toiletten. Hier wird deutlich, dass das vorschlagsgemäße Verfahren ganz ohne separate Spülventile auskommt. Es kann also mit ohnehin vorhandenen Sanitärarmaturen gearbeitet werden, was den Realisierungsaufwand gering hält. Grundsätzlich ist es aber auch nicht ausgeschlossen, dass zusätzlich zu den oben genannten Sanitärarmaturen separate Spülventile vorgesehen sind.

Die bevorzugten Ausgestaltungen gemäß den Ansprüchen 3 und 4 betreffen ganz allgemein die Umsetzung von Spülstrategien. Gemäß Anspruch 3 ist bzw. sind die globale Spülstrategie und/oder die lokalen Spülstrategien jeweils in einem elektronischen Speicher abgelegt. Die jeweilige Spülstrategie kann von einem Steuerungsskript, von einer Softwareroutine oder einfach von einer ID repräsentiert sein. Die Nutzung eines elektronischen Speichers für das Ablegen der jeweiligen Spülstrategie führt zu einer hohen Flexibilität bei der Auslegung des Gebäudewasserversorgungssystems, wie noch erläutert wird.

Gemäß Anspruch 4 definieren die Spülstrategien, zu welchem Zeitpunkt, über welchen Zeitraum und in welcher Weise Spülaktivitäten anzusteuern sind. Mit der Ansteuerung von Spülaktivitäten ist stets gemeint, dass die zugeordnete Armatursteuerung angesteuert wird, um die jeweilige Spülaktivität auszulösen.

Mit der obigen Definition der Spülstrategien ergibt sich eine nahezu unbegrenzte Anpassbarkeit der jeweiligen Spülaktivitäten an die individuellen Gegebenheiten im Wasserleitungsnetzwerk.

Bei der weiter bevorzugten Ausgestaltung gemäß Anspruch 5 ist zumindest ein Teil der Sanitärarmaturen durch eine Benutzeraktion betätigbar, was je nach Auslegung der Sanitärarmatur mit einer entsprechenden Spülaktivität einhergeht. Daher ist es in besonders bevorzugter Ausgestaltung so, dass eine benutzergesteuerte Betätigung über das Datennetzwerk an die Zentralsteuerung geleitet wird. Hiermit ist es möglich, dass die Zentralsteuerung auch eine benutzergesteuerte Betätigung, also beispielsweise eine Toilettenspülung, bei der Ansteuerung der Spülaktivitäten berücksichtigt. Beispielsweise lässt sich der auf das Stagnationsspülen zurückgehende Wasserverbrauch reduzieren, indem die Zentralsteuerung die benutzergesteuerte Betätigung gewissermaßen als Stagnationsspülen interpretiert.

Bei der besonders bevorzugten Ausgestaltung gemäß Anspruch 6 ermittelt die Zentralsteuerung die globale Spülstrategie, vorzugsweise zyklisch, basierend auf einer Optimierungsstrategie. Die globale Spülstrategie wird also vorzugsweise dynamisch an die jeweils aktuellen Gegebenheiten im Wasserleitungsnetzwerk angepasst und in einem elektronischen Speicher der Zentralsteuerung abgelegt. Durch diese dynamische Erzeugung der globalen Spülstrategie lassen sich je nach Anwendung verschiedene Optimierungsstrategien flexibel umsetzen.

Ein besonders flexibler Einsatz der Sanitärarmaturen ergibt sich gemäß Anspruch 7 dadurch, dass die Armatursteuerungen eingerichtet sind, die Armaturaktuatoren nach verschiedenen lokalen Spülstrategien anzusteuern. Damit ist eine der lokalen Spülstrategien als aktive lokale Spülstrategie in einem elektronischen Speicher abgelegt, nach der die Spülaktivitäten im Störungsbetrieb angesteuert werden. Die Definition der jeweils aktiven lokalen Spülstrategie kann über die Zentralsteuerung, oder aber benutzergesteuert über eine Benutzerschnittstelle o. dgl. erfolgen. Die Berücksichtigung verschiedener lokaler Spülstrategien führt zu einer weiteren Verbesserung der Anpassung des Gebäudewasserversorgungssystems an das Wasserleitungsnetzwerk.

Die weiter bevorzugten Ausgestaltungen gemäß den Ansprüchen 8 bis 11 betreffen Varianten für die Auslegung des Normalbetriebs einerseits und des Störungsbetriebs andererseits. Dabei kann es gemäß Anspruch 10 vorgesehen sein, dass im Störungsbetrieb der autonom angesteuerte Teil der Armaturaktuatoren nach der jeweils aktiven lokalen Spülstrategie angesteuert wird. Wenn, wie in Anspruch 8 vorgesehen, im Normalbetrieb die Armaturaktuatoren nach der globalen Spülstrategie und zusätzlich nach der jeweils aktiven lokalen Spülstrategie angesteuert werden, ändert sich im Störungsbetrieb lediglich, dass die zusätzlichen, von der Zentralsteuerung angesteuerten Spülaktivitäten wegfallen. Diese Variante lässt sich steuerungstechnisch besonders einfach umsetzen, da die Armatursteuerungen auf das Auftreten des Störungsbetriebs nicht aktiv reagieren müssen. Vielmehr ist es lediglich so, dass die Armatursteuerungen im Störungsbetrieb von der Zentralsteuerung nicht mehr angesteuert werden.

Anders ist dies bei der weiter bevorzugten Ausgestaltung gemäß Anspruch 11, die vorgibt, dass zumindest ein Teil der Armatursteuerungen eingerichtet ist, den Störungsbetrieb zu erfassen. Dadurch ist es den betreffenden Armatursteuerungen möglich, auf den Eintritt in den Störungsbetrieb zu reagieren, beispielsweise, indem eine Ansteuerung nach einer lokalen Störungs-Spülstrategie erfolgt. Eine solche lokale Störungs-Spülstrategie kann vorsehen, dass das Spülen im Hinblick auf eine Maximierung der Hygiene optimiert ist, ohne dass es auf den resultierenden Wasserverbrauch ankommt. Dieses im Hinblick auf den Wasserverbrauch nicht optimierte Spülen ist im Störungsbetrieb ggf. vertretbar, da zu erwarten ist, dass der Störungsbetrieb nur vorübergehend stattfindet.

Eine sichere Dokumentation aller Spülaktivitäten ist Gegenstand von Anspruch 12. Interessant dabei ist die Überlegung, nicht nur die jeweils angesteuerten Spülaktivitäten, sondern auch jeden Störungsbetrieb über der Zeit zu protokollieren. Dadurch, dass auch der Störungsbetrieb vorschlagsgemäß reproduzierbar abläuft, lassen sich alle Spülaktivitäten durchgehend auch über den Störungsbetrieb hinweg über der Zeit zu protokollieren.

Gemäß Anspruch 13 können die Datenverbindungen leitungsbasiert oder funkbasiert erzeugt werden. Speziell bei der funkbasierten Erzeugung der Datenverbindungen zeigt die vorschlagsgemäße Lösung das hiermit eigentlich erzielbare Potenzial. Denn es ist ja nicht ungewöhnlich, dass funkbasierte Datenverbindungen je nach Umgebungsbedingungen eine nicht zu vernachlässigende Ausfallwahrscheinlichkeit zeigen.

Nach einer weiteren Lehre gemäß Anspruch 14, der eigenständige Bedeutung zukommt, wird ein Gebäudewasserversorgungssystem als solches beansprucht. Das Gebäudewasserversorgungssystem ist vorzugsweise so ausgelegt, dass es sich zur Durchführung des vorschlagsgemäßen Verfahrens eignet. Auf alle Ausführungen zu dem vorschlagsgemäßen Verfahren darf verwiesen werden.

Im Folgenden wird die Erfindung anhand einer lediglich ein Ausführungsbeispiel darstellenden Zeichnung näher erläutert. In der Zeichnung zeigt
- Fig. 1: eine schematische Darstellung eines vorschlagsgemäßen Gebäudewasserversorgungssystems,
- Fig. 2: den zeitlichen Ablauf der Spülaktivitäten an einer Sanitärarmatur gemäß Fig. 1 a) im Normalbetrieb und b) im Störungsbetrieb.

Das vorschlagsgemäße Verfahren dient der Steuerung eines Gebäudewasserversorgungssystems 1. Hierbei geht es um die Nutzung von Trinkwasser durch verschiedene, zu erläuternde Verbraucher.

Im montierten Zustand ist das Gebäudewasserversorgungssystem 1 an ein Wasserleitungsnetzwerk 2 eines Gebäudes 3 angeschlossen. Als Verbraucher weist das Gebäudewasserversorgungssystem 1 mehrere Sanitärarmaturen 4-7 auf, die wiederum im montierten Zustand an das Wasserleitungsnetzwerk 2 angeschlossen sind.

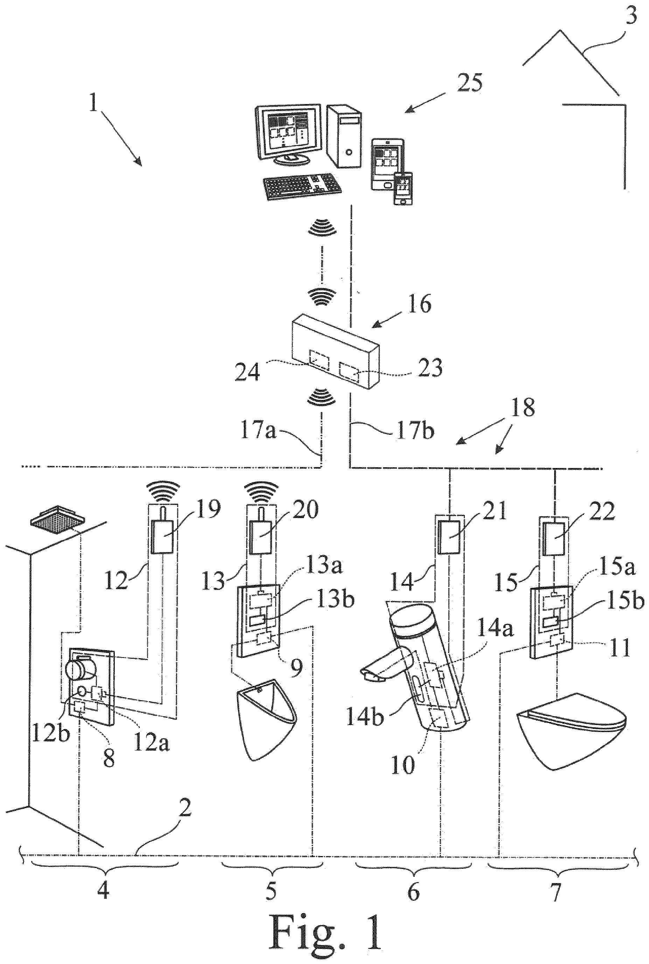

Fig. 1 zeigt, dass den Sanitärarmaturen 4-7 jeweils ein Armaturaktuator 8-11, bei dem es sich hier und vorzugsweise um ein Annaturventil handelt, mit einer elektronischen Armatursteuerung 12-15 zugeordnet ist. Die Armatursteuerungen 12-15 sind jeweils mit einer Steuerelektronik 12a-15a ausgestattet.

Der Armaturaktuator 8-11 dient dazu, der jeweiligen Sanitärarmatur 4-7 gesteuert Trinkwasser zur Verfügung zu stellen. Bei den dargestellten Sanitärarmaturen 4-7 bedeutet dies, dass Trinkwasser dem Wasserleitungsnetzwerk 2 entnommen wird und anschließend zumindest größenteils dem Abfluss zugeführt wird. Vorliegend werden die Sanitärarmaturen 4-7 darüber hinaus für das Spülen zumindest eines Teils des Wasserleitungsnetzwerks 2 genutzt. Im Einzelnen ist es vorgesehen, dass die Armaturaktuatoren 8-11 von den elektronischen Armatursteuerungen 12-15 zum Spülen zumindest eines Teils des Wasserleitungsnetzwerks 2 in einzelnen Spülaktivitäten angesteuert wird. Das Spülen insgesamt wird wie oben angesprochen in einzelnen Spülaktivitäten vorgenommen. Die Doppelnutzung der Sanitärarmaturen 4-7 führt, wie weiter oben erläutert, zu einer wenig aufwendigen Umsetzung des vorschlagsgemäßen Verfahrens.

Das Gebäudewasserversorgungssystem 1 weist ferner eine elektronische Zentralsteuerung 16 auf, die über Datenverbindungen 17a, 17b ein Datennetzwerk 18 mit den Armatursteuerungen 12-15 ausbildet. Die Sanitärarmaturen 4-7 sowie die Zentralsteuerung 16 stellen also Netzwerkteilnehmer des Datennetzwerks 18 bereit. Hierfür sind den Armatursteuerungen 12-15 sowie der Zentralsteuerung 16 entsprechende Netzwerkmodule 19-24 zugeordnet. Dabei sind die Datenverbindungen 17a der Sanitärarmaturen 4, 5 funkbasiert ausgestaltet, während die Datenverbindungen 17b der Sanitärannaturen 6, 7 leitungsbasiert ausgestaltet sind. Grundsätzlich können die Netzwerkmodule 19-24 jeweils eine Punkt-Zu-Punkt-Verbindung zu der Zentralsteuerung 16 bereitstellen. Hier und vorzugsweise ist es allerdings so, dass die Netzwerkmodule 19-24 jeweils die Funktion eines Routers übernehmen können, um über die Datenverbindungen 17a, 17b große Entfernungen überbrücken zu können, ohne dass die Übertragungsqualität nennenswert leidet.

Wesentlich ist nun, dass im Nonnalbetrieb die Armatursteuerungen 12-15 und damit die Annaturaktuatoren 8-11 von der Zentralsteuerung 16 nach einer globalen Spülstrategie angesteuert werden. Wesentlich ist weiter, dass im Störungsbetrieb, also bei zumindest teilweisem Wegfall der Zentralsteuerung 16, zumindest ein Teil der Armaturaktuatoren 8-11 von den zugeordenten Armatursteuerungen 12-15 autonom nach einer jeweils lokalen Spülstrategie angesteuert wird. Wie oben erläutert, wird mit diesem redundanten steuerungstechnischen Aufbau erreicht, dass im Störungsbetrieb stets ein reproduzierbares Spülen des Wasserleitungsnetzwerks 2, nämlich nach der jeweils lokalen Spülstrategie der jeweiligen Armatursteuerung 12-15, stattfinden kann.

Je nach Ausgestaltung der Zentralsteuerung 16 ist die leitungsbasierte oder funkbasierte Verbindung zwischen der Zentralsteuerung 16 und Peripheriegeräten 25 wie Netzwerk-PCs, Tablets, iPhones o. dgl. vorgesehen. Damit sind vielfältige Verwaltungsmaßnahmen über die Peripheriegeräte 25 umsetzbar, wie beispielsweise die Programmierung der Zentralsteuerung 16, die noch zu erläuternde Protokollierung von Spülaktivitäten o. dgl..

Für die Ausgestaltung der Sanitärarmaturen 4-7 sind zahlreiche vorteilhafte Varianten denkbar. Hier und vorzugsweise handelt es sich bei der Sanitärarmatur 4 um eine Wasserauslassstelle in Form einer Dusche, bei der Sanitärarmatur 5 um ein Urinal, bei der Sanitärarmatur 6 um eine Wasserauslassstelle in Form einer Waschtischarmatur und bei der Sanitärarmatur 7 um eine Toilette. Andere Varianten der Sanitärarmaturen 4-7 sind denkbar.

Hier und vorzugsweise ist es so, dass die globale Spülstrategie in einem elektronischen Speicher der Zentralsteuerung 16 abgelegt ist. Ferner ist es hier und vorzugsweise vorgesehen, dass die lokalen Spülstrategien jeweils in einem elektronischen Speicher der Armatursteuerungen 12-15 abgelegt sind. Die lokalen Spülstrategien sind also in entsprechend lokalen Speichern der einzelnen Armatursteuerungen 12-15 abgelegt. Hinsichtlich der Möglichkeiten für das Ablegen der Spülstrategien darf auf den allgemeinen Teil der Beschreibung verwiesen werden.

Die Spülstrategien können ganz unterschiedliche Vorgaben für das avisierte Spülen umfassen. Vorzugsweise definieren die Spülstrategien jedenfalls, zu welchem Zeitpunkt, über welchen Zeitraum und in welcher Weise Spülaktivitäten anzusteuern sind. Der letztgenannte Aspekt umfasst beispielsweise ein gepulstes Spülen, ein Spülen mit sich über die Zeit stetig veränderndem Volumenstrom o. dgl..

Im einfachsten Fall sind die Spülstrategien zeitbasiert definiert. Dies bedeutet beispielsweise, dass der Armaturaktuator 8-11 in vorbestimmten Zeitabständen, beispielsweise alle zehn Stunden, zum Spülen angesteuert wird. Alternativ kann es vorgesehen sein, dass die Spülstrategien ereignisbasiert definiert sind. Ein Ereignis kann beispielsweise eine Benutzeraktion und/oder ein Sensorereignis sein. Beispielsweise ist es denkbar, dass der betreffende Armaturaktuator 8-11 stets nach Ablauf eines vorbestimmten Zeitintervalls nach einer Benutzeraktion zum Spülen angesteuert wird. Die zeitbasierte und ereignisbasierte Definition der Spülstrategien können grundsätzlich auch in Kombination Anwendung finden.

Bei dem dargestellten und insoweit bevorzugten Ausführungsbeispiel sind alle Sanitärarmaturen 4-7 durch eine Benutzeraktion, nämlich durch die Annäherung des Benutzers, einer Hand des Benutzers o. dgl. betätigbar. Dies kann auch nur für einen Teil der Sanitärarmaturen 4-7 vorgesehen sein.

Für die benutzergesteuerte Betätigung weisen die Armatursteuerungen 12-15 der Sanitärarmaturen 4-7 vorzugsweise einen Annatursensor 12b-15b auf, bei dem es sich hier und vorzugsweise um einen Annäherungssensor handelt. Solche Armatursensoren 12b-15b können als Infrarotsensoren, Ultraschallsensoren, kapazitive Sensoren, Radarsensoren o. dgl. ausgestaltet sein.

Grundsätzlich kann es vorteilhaft sein, eine benutzergesteuerte Betätigung über das Datennetzwerk 18 an die Zentralsteuerung 16 zu leiten, so dass die Zentralsteuerung 16 die globale Spülstrategie in Reaktion auf die benutzergesteuerte Betätigung modifizieren kann. Alternativ oder zusätzlich kann es vorgesehen sein, dass jede von den Armatursteuerungen 12-15 angesteuerte Spülaktivität über das Datennetzwerk 18 an die Zentralsteuerung 16 geleitet wird. Dadurch liegen der Zentralsteuerung 16 alle das Spülen des Wasserleitungsnetzwerks 2 betreffenden Informationen zur Verfügung, so dass die Zentralsteuerung 16 in der Lage ist, die globale Spülstrategie laufend zu optimieren.

Entsprechend ist es vorzugsweise so, dass die Zentralsteuerung 16 die globale Spülstrategie, vorzugsweise zyklisch, basierend auf einer Optimierungsstrategie ermittelt und in einem elektronischen Speicher ablegt. In besonders bevorzugter Ausgestaltung ist die Optimierungsstrategie auf die Vermeidung von Stagnationswasser in zumindest einem Teil des Wassernetzwerks gerichtet. Je nach Definition der Optimierungsstrategie kann hier als Optimierungskriterium neben der Vermeidung von Stagnationswasser auch ein möglichst geringer Wasserverbrauch sein.

Eine besonders flexibel betreibbare Anordnung ergibt sich dadurch, dass zumindest ein Teil der Armatursteuerungen 8-11 eingerichtet ist, die Armaturaktuatoren 8-11 nach verschiedenen lokalen Spülstrategien anzusteuern. Dabei ist es weiter vorzugsweise vorgesehen, dass jeweils in einem elektronischen Speicher der Armatursteuerungen 12-15 eine der lokalen Spülstrategien als aktive lokale Spülstrategie abgelegt ist. Die Auswahl der jeweils aktiven lokalen Spülstrategie kann benutzergesteuert, beispielsweise über den Armatursensor 12b-15b, erfolgen. Im Einzelnen kann dies beispielsweise dadurch erfolgen, dass eine bestimmte Auslösereihenfolge des Armatursensors 12b-15b zu einer entsprechenden Auswahl der aktiven lokalen Spülstrategie führt. Alternativ kann es auch vorgesehen sein, dass die aktive lokale Spülstrategie von der Zentralsteuerung 16 ausgewählt wird.

Die Möglichkeit der Ansteuerung der Armaturaktuatoren 8-11 nach verschiedenen lokalen Spülstrategien ermöglicht es auch, dass in den Speichern mindestens zweier Armatursteuerungen 12-15 unterschiedliche Spülstrategien als jeweils aktive lokale Spülstrategie abgelegt werden. Damit können die Sanitärarmaturen 4-7 im Störungsbetrieb ganz unterschiedliche Spülverhalten aufweisen, was ggfs. den jeweiligen Gegebenheiten des Wasserleitungsnetzwerks 2 Rechnung trägt. Dadurch lässt sich auch im Störungsbetrieb ein vergleichsweise effizientes Spülen des Wasserleitungsnetzwerks 2 realisieren.

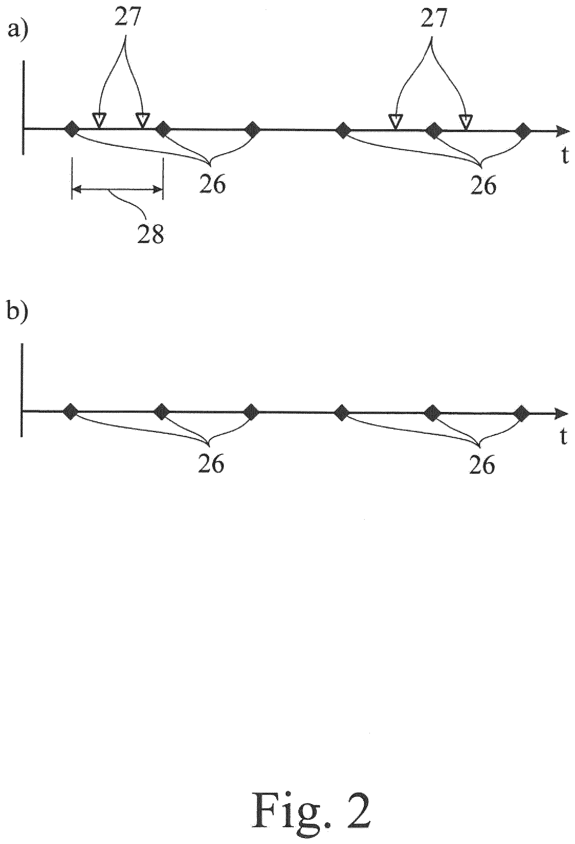

Die globale Spülstrategie und die jeweils lokalen Spülstrategien lassen sich nun auf unterschiedliche Art und Weise umsetzen. Hier und vorzugsweise ist es vorgesehen, dass im Normalbetrieb die Armaturaktuatoren 8-11 nach der globalen Spülstrategie und zusätzlich nach der jeweils lokalen Spülstrategie, insbesondere nach der jeweils aktiven Spülstrategie, angesteuert werden. Dies ist ganz schematisch der Darstellung gemäß Fig. 2a zu entnehmen. Dort sind die Spülaktivitäten nach der lokalen Spülstrategie mit dem Bezugszeichen 26 angedeutet, während die Spülaktivitäten nach der globalen Spülstrategie mit dem Bezugszeichen 27 angedeutet sind. Der Darstellung gemäß Fig. 2a lässt sich entnehmen, dass die lokale Spülstrategie zyklische Spülaktivitäten mit gleichbleibendem zeitlichen Abstand 28 vorsieht. Die Spülaktivitäten 27 nach der globalen Spülstrategie dagegen sind von der Zentralsteuerung 16 so bestimmt worden, dass sich ein optimales Spülergebnis im Hinblick auf die Vermeidung von Stagnationswasser ergibt. Dabei berücksichtigt die Zentralsteuerung 16 vorzugsweise auch die der lokalen Spülstrategie entsprechenden Aktivitäten 26.

Grundsätzlich kann es aber auch vorgesehen sein, dass im Normalbetrieb die Armaturaktuatoren 8-11 ausschließlich nach der globalen Spülstrategie angesteuert werden. Dies ist in der Zeichnung nicht dargestellt.

Interessant ist nun, wie der Darstellung gemäß Fig. 2b zu entnehmen ist, dass im Störungsbetrieb die Armaturaktuatoren 8-11 nunmehr nach der jeweils aktiven lokalen Spülstrategie angesteuert werden. In dem in Fig. 2 dargestellten Beispiel bedeutet dies, dass die Spülaktivitäten 27, die auf die globale Spülstrategie zurückgehen, wegfallen und dass die Spülaktivitäten 26, die auf die jeweilige Spülstrategie zurückgehen, fortgeführt werden. Ein Vergleich der Fig. 2a und 2b zeigt, dass die Umsetzung der Spülaktivitäten gemäß Fig. 2 auf einfachste Weise möglich ist. Der Grund hierfür besteht darin, dass die jeweilige Armatursteuerung 12-15 unabhängig von jeglichen Randbedingungen die lokale Spülstrategie abarbeitet, während die von der Zentralsteuerung 16 angesteuerten Spülaktivitäten, die auf die globale Spülstrategie zurückgehen, zusätzlich vorgesehen sind. Im Störungsbetrieb fallen diese zusätzlichen Spülaktivitäten 27 weg, ohne dass von der jeweiligen Armatursteuerung 12-15 irgendeine aktive Maßnahme zu treffen ist, was die Umsetzung des Gebäudewasserversorgungssystems 1 wie oben erläutert auf besonders einfache Art und Weise ermöglicht.

Es darf noch darauf hingewiesen werden, dass die Darstellung gemäß Fig. 2 nur eine einzige Sanitärarmatur, hier die Sanitärarmatur 4, betrifft. Derartige Spülaktivitäten sind für die übrigen Sanitärarmaturen 5-7 entsprechend vorgesehen.

Eine alternative Ausgestaltung, die eine aktive Reaktion der Armaturaktuatoren 8-11 auf den Störungsbetrieb ermöglicht, sieht vor, dass zumindest ein Teil der Armatursteuerungen 12-15 eingerichtet ist, den Störungsbetrieb zu erfassen. Dabei ist es weiter vorgesehen, dass die betreffenden Armatursteuerungen 12-15 bei einem Erfassen des Störungsbetriebs den jeweils zugeordneten Armaturaktuator 8-11 zum Spülen nach der jeweils aktiven Spülstrategie oder einer lokalen Störungs-Spülstrategie ansteuern. Die lokale Störungs-Spülstrategie kann je nach Störungsbetrieb unterschiedlich ausfallen, so dass eine optimierte Reaktion der Armatursteuerungen 12-15 auf den jeweiligen Störungsbetrieb möglich ist.

Für das Erfassen des Störbetriebs, also des zumindest teilweisen Wegfalls der Zentralsteuerung 16, sind verschiedene vorteilhafte Möglichkeiten denkbar. In besonders bevorzugter Ausgestaltung ist zwischen der Zentralsteuerung 16 und den Armatursteuerungen 12-15 eine zyklische Kommunikation vorgesehen, wobei bei einem Ausbleiben der Kommunikation, insbesondere über eine vorbestimmte Mindest-Zeitspanne hinweg, der Störungsbetrieb als erfasst gilt. Andere Varianten für das Erfassen des Störungsbetriebs sind denkbar.

Um das Hygieneniveau im Wasserleitungsnetzwerk 2 über der Zeit dokumentieren zu können, ist es vorzugsweise so, dass die Zentralsteuerung 16 eingerichtet ist, jede von den Armatursteuerungen 12-15 angesteuerte Spülaktivität und/oder jeden Störungsbetrieb über der Zeit zu protokollieren. Dabei können die entsprechenden Spüldaten mit zugeordneten Zeitstempeln in einem elektronischen Speicher der Zentralsteuerung 16 oder in einem elektronischen Speicher eines Peripheriegeräts 25 abgelegt werden.

Wie oben angedeutet, werden die Datenverbindungen 17a des Datennetzwerks 18 funkbasiert erzeugt, während die Datenverbindungen 17b des Datennetzwerks 18 leitungsbasiert erzeugt werden.

Nach einer weiteren Lehre, der eigenständige Bedeutung zukommt, wird das oben erläuterte Gebäudewasserversorgungssystem 1, das sich insbesondere zur Durchführung eines vorschlagsgemäßen Verfahrens eignet, als solches beansprucht.

Das Gebäudeversorgungssystem 1 ist im montierten Zustand an ein Wasserleitungsnetzwerk 2 eines Gebäudes 3 angeschlossen, wobei das Gebäudewasserversorgungssystem 1 mehrere Sanitärarmaturen 4-7 aufweist, die im montierten Zustand an das Wasserleitungsnetzwerk 2 angeschlossen sind, wobei den Sanitärarmaturen 4-7 jeweils ein Armaturaktuator 8-11, insbesondere ein Armaturventil, mit einer elektronischen Armatursteuerung 12-15 zugeordnet ist, der zum Spülen zumindest eines Teils des Wasserleitungsnetzwerks 2 in Spülaktivitäten von der Annatursteuerung 12-15 angesteuert wird, wobei das Gebäudewasserversorgungssystem 1 eine elektronische Zentralsteuerung 16 aufweist, die über, hier und vorzugsweise bidirektionale, Datenverbindungen ein Datennetzwerk 18 mit den Armatursteuerungen 12-15 ausbildet.

Wesentlich ist bei dem vorschlagsgemäßen Gebäudewasserversorgungssystem 1, dass im Normalbetrieb die Armatursteuerungen 12-15 und damit die Armaturaktuatoren 8-11 von der Zentralsteuerung 16 nach einer globalen Spülstrategie ansteuerbar sind, wobei im Störungsbetrieb bei zumindest teilweisem Wegfall der Zentralsteuerung 16 zumindest ein Teil der Armaturaktuatoren 8-11 von den zugeordenten Armatursteuerungen 12-15 autonom nach einer jeweils lokalen Spülstrategie angesteuert wird.

Nach einer weiteren Lehre wird ein Gebäudewasserversorgungssystem 1 als solches beansprucht. Das Gebäudewasserversorgungssystem ist vorzugsweise so ausgelegt, dass es sich zur Durchführung des vorschlagsgemäßen Verfahrens eignet. Auf alle Ausführungen zu dem vorschlagsgemäßen Verfahren darf verwiesen werden.

Es darf schließlich noch darauf hingewiesen werden, dass in der Zeichnung zwar eine einzige Zentralsteuerung 16 vorgesehen ist, die mit den Sanitärarmaturen 4-7 über das Datennetzwerk 18 steuerungstechnisch gekoppelt ist. Grundsätzlich kann es aber auch vorgesehen sein, dass zwei Zentralsteuerungen 16 oder mehrere Zentralsteuerungen 16 vorgesehen sind, die wiederum über Datenverbindungen miteinander gekoppelt sind.

## Patentansprüche

1. Verfahren zur Steuerung eines Gebäudewasserversorgungssystems (1), das im montierten Zustand an ein Wasserleitungsnetzwerk (2) eines Gebäudes (3) angeschlossen ist, wobei das Gebäudewasserversorgungssystem (1) mehrere Sanitärarmaturen (4-7) aufweist, wobei den Sanitärarmaturen (4-7) jeweils ein Armaturaktuator (8-11), insbesondere ein Armaturventil, mit einer elektronischen Armatursteuerung (12-15) zugeordnet ist, der zum Spülen zumindest eines Teils des Wasserleitungsnetzwerks (2) in Spülaktivitäten von der Armatursteuerung (12-15) angesteuert wird,
wobei das Gebäudewasserversorgungssystem (1) eine elektronische Zentralsteuerung (16) aufweist, die über, insbesondere bidirektionale, Datenverbindungen (17a, 17b) ein Datennetzwerk (18) mit den Armatursteuerungen (12-15) ausbildet,
**dadurch gekennzeichnet,**
**dass** im Normalbetrieb die Armatursteuerungen (12-15) und damit die Armaturaktuatoren (8-11) von der Zentralsteuerung (16) nach einer globalen Spülstrategie angesteuert werden und
**dass** im Störungsbetrieb bei zumindest teilweisem Wegfall der Zentralsteuerung (16) zumindest ein Teil der Armaturaktuatoren (8-11) von den zugeordenten Armatursteuerungen (12-15) autonom nach einer jeweils lokalen Spülstrategie angesteuert wird.

2. Verfahren nach Anspruch 1, **dadurch gekennzeichnet, dass** es sich bei den Sanitärarmaturen (4-7) um Wasserauslassstellen, Urinale oder Toiletten handelt.

3. Verfahren nach Anspruch 1 oder 2, **dadurch gekennzeichnet, dass** die globale Spülstrategie in einem elektronischen Speicher der Zentralsteuerung (16) abgelegt ist, und/oder, dass die lokalen Spülstrategien jeweils in einem elektronischen Speicher der Armatursteuerungen (12-15) abgelegt sind.

4. Verfahren nach einem der vorhergehenden Ansprüche, **dadurch gekennzeichnet, dass** die Spülstrategien definieren, zu welchem Zeitpunkt, über welchen Zeitraum und in welcher Weise Spülaktivitäten anzusteuern sind, vorzugsweise, dass die Spülstrategien zeitbasiert und/oder ereignisbasiert definiert sind, vorzugsweise, dass ein Ereignis eine Benutzeraktion und/oder ein Sensorereignis ist.

5. Verfahren nach einem der vorhergehenden Ansprüche, **dadurch gekennzeichnet, dass** zumindest ein Teil der Sanitärarmaturen (4-7) durch eine Benutzeraktion betätigbar ist und dass eine benutzergesteuerte Betätigung über das Datennetzwerk (18) an die Zentralsteuerung (16) geleitet wird, und/oder, dass jede von den Armatursteuerungen (12-15) angesteuerte Spülaktivität über das Datennetzwerk (18) an die Zentralsteuerung (16) geleitet wird.

6. Verfahren nach einem der vorhergehenden Ansprüche, **dadurch gekennzeichnet, dass** die Zentralsteuerung (16) die globale Spülstrategie basierend auf einer Optimierungsstrategie ermittelt und in einem elektronischen Speicher ablegt, vorzugsweise, dass die Optimierungsstrategie auf die Vermeidung von Stagnationswasser in zumindest einem Teil des Wasserleitungsnetzwerks (2) gerichtet ist.

7. Verfahren nach einem der vorhergehenden Ansprüche, **dadurch gekennzeichnet, dass** zumindest ein Teil der Armatursteuerungen (12-15) eingerichtet ist, die Armaturaktuatoren (8-11) nach verschiedenen lokalen Spülstrategien anzusteuern, vorzugsweise, dass jeweils in einem elektronischen Speicher der Armatursteuerungen (12-15) eine der lokalen Spülstrategien als aktive lokale Spülstrategie abgelegt ist, vorzugsweise, dass in den Speichern mindestens zweier Armatursteuerungen (12-15) unterschiedliche Spülstrategien als jeweils aktive lokale Spülstrategie abgelegt werden.

8. Verfahren nach einem der vorhergehenden Ansprüche, **dadurch gekennzeichnet, dass** im Normalbetrieb die Armaturaktuatoren (8-11) nach der globalen Spülstrategie und zusätzlich nach der jeweils lokalen Spülstrategie, insbesondere nach der jeweils aktiven lokalen Spülstrategie, angesteuert werden.

9. Verfahren nach einem der vorhergehenden Ansprüche, **dadurch gekennzeichnet, dass** im Normalbetrieb die Armaturaktuatoren (8-11) ausschließlich nach der globalen Spül strategie angesteuert werden.

10. Verfahren nach einem der vorhergehenden Ansprüche, **dadurch gekennzeichnet, dass** im Störungsbetrieb der autonom angesteuerte Teil der Armaturaktuatoren (8-11) nach der jeweils aktiven lokalen Spülstrategie angesteuert wird.

11. Verfahren nach einem der vorhergehenden Ansprüche, **dadurch gekennzeichnet, dass** zumindest ein Teil der Armatursteuerungen (12-15) eingerichtet ist, den Störungsbetrieb zu erfassen, und bei einem Erfassen des Störungsbetriebs den jeweils zugeordneten Armaturaktuator (8-11) zum Spülen nach der jeweils aktiven lokalen Spülstrategie oder einer lokalen Störungs-Spülstrategie anzusteuern, vorzugsweise, dass zwischen der Zentralsteuerung (16) und den Armatursteuerungen (12-15) eine zyklische Kommunikation vorgesehen ist und dass bei einem Ausbleiben der Kommunikation der Störungsbetrieb als erfasst gilt.

12. Verfahren nach einem der vorhergehenden Ansprüche, **dadurch gekennzeichnet, dass** die Zentralsteuerung (16) eingerichtet ist, jede von den Armatursteuerungen (12-15) angesteuerte Spülaktivität und/oder jeden Störungsbetrieb über der Zeit zu protokollieren.

13. Verfahren nach einem der vorhergehenden Ansprüche, **dadurch gekennzeichnet, dass** die Datenverbindungen (17a, 17b) funkbasiert oder leitungsbasiert erzeugt werden.

14. Gebäudewasserversorgungssystem, insbesondere zur Durchführung eines Verfahrens nach einem der vorhergehenden Ansprüche, das im montierten Zustand an ein Wasserleitungsnetzwerk (2) eines Gebäudes (3) angeschlossen ist, wobei das Gebäudewasserversorgungssystem (1) mehrere Sanitärarmaturen (4-7) aufweist, wobei den Sanitärarmaturen (4-7) jeweils ein Armaturaktuator (8-11), insbesondere ein Armaturventil, mit einer elektronischen Armatursteuerung (12-15) zugeordnet ist, der zum Spülen zumindest eines Teils des Wasserleitungsnetzwerks (2) in Spülaktivitäten von der Armatursteuerung (12-15) angesteuert wird,
wobei das Gebäudewasserversorgungssystem (1) eine elektronische Zentralsteuerung (16) aufweist, die über, insbesondere bidirektionale, Datenverbindungen (17a, 17b) ein Datennetzwerk (18) mit den Armatursteuerungen (12-15) ausbildet,
**dadurch gekennzeichnet,**
**dass** im Normalbetrieb die Armatursteuerungen (12-15) und damit die Armaturaktuatoren (8-11) von der Zentralsteuerung (16) nach einer globalen Spülstrategie ansteuerbar sind, und dass im Störungsbetrieb bei zumindest teilweisem Wegfall der Zentralsteuerung (16) zumindest ein Teil der Armaturaktuatoren (8-11) von den zugeordenten Armatursteuerungen (12-15) autonom nach einer jeweils lokalen Spülstrategie ansteuerbar ist.

## Claims

1. Method for controlling a building water supply system (1) which, in the installed state, is connected to a water supply network (2) of a building (3), wherein the building water supply system (1) has multiple sanitary fittings (4-7), wherein the sanitary fittings (4-7) are each assigned a fitting actuator (8-11), in particular a fitting valve, with an electronic fitting controller (12-15), which fitting actuator is activated by the fitting controller (12-15) for flushing at least a part of the water supply network (2) during flushing activities,
wherein the building water supply system (1) has an electronic central controller (16) which, via, in particular bidirectional, data connections (17a, 17b), forms a data network (18) with the fitting controllers (12-15),
**characterized**
**in that**, during normal operation, the fitting controllers (12-15) and thus the fitting actuators (8-11) are activated by the central controller (16) according to a global flushing strategy, and
**in that**, during a fault operation with at least partial drop-out of the central controller (16), at least some of the fitting actuators (8-11) are activated autonomously by the assigned fitting controllers (12-15) according to an in each case local flushing strategy.

2. Method according to Claim 1, **characterized in that** the sanitary fittings (4-7) are water outlets, urinals or toilets.

3. Method according to Claim 1 or 2, **characterized in that** the global flushing strategy is stored in an electronic memory of the central controller (16), and/or **in that** the local flushing strategies are each stored in an electronic memory of the fitting controllers (12-15).

4. Method according to one of the preceding claims, **characterized in that** the flushing strategies define the time at which, the period of time over which and the manner in which flushing activities are to be activated, preferably **in that** the flushing strategies are defined in a time-based and/or event-based manner, preferably **in that** an event is a user action and/or a sensor event.

5. Method according to one of the preceding claims, **characterized in that** at least some of the sanitary fittings (4-7) can be actuated by a user action, and **in that** a user-controlled actuation is passed to the central controller (16) via the data network (18), and/or **in that** each flushing activity activated by the fitting controllers (12-15) is passed to the central controller (16) via the data network (18).

6. Method according to one of the preceding claims, **characterized in that** the central controller (16) determines the global flushing strategy on the basis of an optimization strategy and stores said global flushing strategy in an electronic memory, preferably in that the optimization strategy is aimed at avoiding stagnant water in at least a part of the water supply network (2).

7. Method according to one of the preceding claims, **characterized in that** at least some of the fitting controllers (12-15) are configured to activate the fitting actuators (8-11) according to different local flushing strategies, preferably **in that** one of the local flushing strategies is stored as the active local flushing strategy in an electronic memory of the fitting controllers (12-15) in each case, preferably **in that** different flushing strategies are stored as the in each case active local flushing strategy in the memories of at least two fitting controllers (12-15).

8. Method according to one of the preceding claims, **characterized in that**, during normal operation, the fitting actuators (8-11) are activated according to the global flushing strategy and additionally according to the in each case local flushing strategy, in particular according to the in each case active local flushing strategy.

9. Method according to one of the preceding claims, **characterized in that**, during normal operation, the fitting actuators (8-11) are activated exclusively according to the global flushing strategy.

10. Method according to one of the preceding claims, **characterized in that**, during a fault operation, those fitting actuators (8-11) activated autonomously are activated according to the in each case active local flushing strategy.

11. Method according to one of the preceding claims, **characterized in that** at least some of the fitting controllers (12-15) are configured to detect a fault operation and, in the event of a fault operation being detected, to activate the in each case assigned fitting actuator (8-11) for flushing according to the in each case active local flushing strategy or a local fault flushing strategy, preferably **in that** cyclical communication is provided between the central controller (16) and the fitting controllers (12-15), and **in that**, in the event of an absence of the communication, a fault operation is considered to be detected.

12. Method according to one of the preceding claims, **characterized in that** the central controller (16) is configured to log each flushing activity activated by the fitting controllers (12-15) and/or each fault operation over time.

13. Method according to one of the preceding claims, **characterized in that** the data connections (17a, 17b) are produced in a radio-based or line-based manner.

14. Building water supply system, in particular for carrying out a method according to one of the preceding claims, which, in the installed state, is connected to a water supply network (2) of a building (3), wherein the building water supply system (1) has multiple sanitary fittings (4-7), wherein the sanitary fittings (4-7) are each assigned a fitting actuator (8-11), in particular a fitting valve, with an electronic fitting controller (12-15), which fitting actuator is activated by the fitting controller (12-15) for flushing at least a part of the water supply network (2) during flushing activities,
wherein the building water supply system (1) has an electronic central controller (16) which, via, in particular bidirectional, data connections (17a, 17b), forms a data network (18) with the fitting controllers (12-15),
**characterized**
**in that**, during normal operation, the fitting controllers (12-15) and thus the fitting actuators (8-11) can be activated by the central controller (16) according to a global flushing strategy, and
**in that**, during a fault operation with at least partial drop-out of the central controller (16), at least some of the fitting actuators (8-11) can be activated autonomously by the assigned fitting controllers (12-15) according to an in each case local flushing strategy.

## Revendications

1. Procédé de commande d'un système d'alimentation en eau d'un bâtiment (1) qui, à l'état monté, est raccordé à un réseau de canalisations d'eau (2) d'un bâtiment (3), le système d'alimentation en eau du bâtiment (1) présentant plusieurs équipements sanitaires (4 à 7), les équipements sanitaires (4 à 7) étant respectivement associés à un actionneur d'équipement (8 à 11), en particulier une valve d'équipement, doté d'une commande d'équipement électronique (12 à 15) et qui est piloté par la commande d'équipement (12 à 15) pour le rinçage d'au moins une partie du réseau de canalisations d'eau (2) à l'occasion d'activités de rinçage,
le système d'alimentation en eau du bâtiment (1) présentant une commande centrale électronique (16) qui réalise un réseau de données (18) doté de commandes d'équipement (12 à 15) par l'intermédiaire de liaisons de données (17a, 17b) en particulier bidirectionnelles, **caractérisé**
**en ce qu'**en fonctionnement normal, les commandes d'équipement (12 à 15), et donc les actionneurs d'équipement (8 à 11), sont pilotées par la commande centrale (16) selon une stratégie de rinçage globale, et
**en ce qu'**en fonctionnement anormal, en cas de défaillance au moins partielle de la commande centrale (16), au moins une partie des actionneurs d'équipement (8 à 11) est pilotée de manière autonome par les commandes d'équipement associées (12 à 15) selon une stratégie de rinçage respectivement locale.

2. Procédé selon la revendication 1, **caractérisé en ce que** les équipements sanitaires (4 à 7) sont des points de sortie d'eau, des urinoirs ou des toilettes.

3. Procédé selon la revendication 1 ou 2, **caractérisé en ce que** la stratégie de rinçage globale est enregistrée dans une mémoire électronique de la commande centrale (16), et/ou **en ce que** les stratégies de rinçage locales sont enregistrées respectivement dans une mémoire électronique des commandes d'équipement (12 à 15).

4. Procédé selon l'une quelconque des revendications précédentes, **caractérisé en ce que** les stratégies de rinçage définissent à quel moment, pendant quelle période et de quelle façon des activités de rinçage sont à piloter, de préférence **en ce que** les stratégies de rinçage sont définies sur la base du temps et/ou sur la base d'évènements, de préférence **en ce qu'**un évènement est une action d'utilisateur et/ou un évènement de capteur.

5. Procédé selon l'une quelconque des revendications précédentes, **caractérisé en ce qu'**au moins une partie des équipements sanitaires (4 à 7) peut être actionnée par une action d'utilisateur, et **en ce qu'**un actionnement commandé par l'utilisateur est acheminé par le réseau de données (18) jusqu'à la commande centrale (16), et/ou **en ce que** chaque activité de rinçage pilotée par les commandes d'équipement (12 à 15) est acheminée par le réseau de données (18) jusqu'à la commande centrale (16).

6. Procédé selon l'une quelconque des revendications précédentes, **caractérisé en ce que** la commande centrale (16) détermine la stratégie de rinçage globale sur la base d'une stratégie d'optimisation et l'enregistre dans une mémoire électronique, de préférence **en ce que** la stratégie d'optimisation vise à éviter l'eau stagnante dans au moins une partie du réseau de canalisations d'eau (2).

7. Procédé selon l'une quelconque des revendications précédentes, **caractérisé en ce qu'**au moins une partie des commandes d'équipement (12 à 15) est aménagée pour piloter les actionneurs d'équipement (8 à 11) selon différentes stratégies de rinçage locales, de préférence **en ce que** respectivement dans une mémoire électronique des commandes d'équipement (12 à 15), l'une des stratégies de rinçage locales est enregistrée comme stratégie de rinçage locale active, de préférence en ce que dans les mémoires d'au moins deux commandes d'équipement (12 à 15), différentes stratégies de rinçage sont enregistrées comme stratégie de rinçage locale respectivement active.

8. Procédé selon l'une quelconque des revendications précédentes, **caractérisé en ce qu'**en fonctionnement normal, les actionneurs d'équipement (8 à 11) sont pilotés selon la stratégie de rinçage globale et sont en outre pilotés selon la stratégie de rinçage respectivement locale, en particulier selon la stratégie de rinçage locale respectivement active.

9. Procédé selon l'une quelconque des revendications précédentes, **caractérisé en ce qu'**en fonctionnement normal, les actionneurs d'équipement (8 à 11) sont pilotés exclusivement selon la stratégie de rinçage globale.

10. Procédé selon l'une quelconque des revendications précédentes, **caractérisé en ce qu'**en fonctionnement anormal, la partie des actionneurs d'équipement (8 à 11) commandée de manière autonome est pilotée selon la stratégie de rinçage locale respectivement active.

11. Procédé selon l'une quelconque des revendications précédentes, **caractérisé en ce qu'**au moins une partie des commandes d'équipement (12 à 15) est aménagée pour détecter le fonctionnement anormal, et en cas de détection du fonctionnement anormal pour piloter l'actionneur d'équipement (8 à 11) respectivement associé pour le rinçage selon la stratégie de rinçage locale respectivement active ou selon une stratégie de rinçage anormale locale, de préférence **en ce qu'**entre la commande centrale (16) et les commandes d'équipement (12 à 15), une communication cyclique est prévue, et **en ce que** le fonctionnement anormal est considéré comme détecté en l'absence de communication.

12. Procédé selon l'une quelconque des revendications précédentes, **caractérisé en ce que** la commande centrale (16) est aménagée pour consigner dans le temps chaque activité de rinçage pilotée par les commandes d'équipement (12 à 15) et/ou chaque fonctionnement anormal.

13. Procédé selon l'une quelconque des revendications précédentes, **caractérisé en ce que** les liaisons de données (17a, 17b) sont générées par voie radio ou par voie filaire.

14. Système d'alimentation en eau d'un bâtiment, en particulier pour effectuer un procédé selon l'une quelconque des revendications précédentes, qui, à l'état monté, est raccordé à un réseau de canalisations d'eau (2) d'un bâtiment (3), le système d'alimentation en eau du bâtiment (1) présentant plusieurs équipements sanitaires (4 à 7), les équipements sanitaires (4 à 7) étant respectivement associés à un actionneur d'équipement (8 à 11), en particulier une valve d'équipement, doté d'une commande d'équipement électronique (12 à 15) et qui est piloté par la commande d'équipement (12 à 15) pour le rinçage d'au moins une partie du réseau de canalisations d'eau (2) à l'occasion d'activités de rinçage,
le système d'alimentation en eau du bâtiment (1) présentant une commande centrale électronique (16) qui réalise par des liaisons de données (17a, 17b), en particulier bidirectionnelles, un réseau de données (18) avec les commandes d'équipement (12 à 15), **caractérisé en ce qu'**en fonctionnement normal, les commandes d'équipement (12 à 15), et donc les actionneurs d'équipement (8 à 11), peuvent être pilotés par la commande centrale (16) selon une stratégie de rinçage globale, et
**en ce qu'**en fonctionnement anormal, en cas de défaillance au moins partielle de la commande centrale (16), au moins une partie des actionneurs d'équipement (8 à 11) est pilotée de manière autonome par les commandes d'équipement associées (12 à 15) selon une stratégie de rinçage respectivement locale.
